(19) Europäisches Patentamt
European Patent Office
Office européen des brevets

(11) Veröffentlichungsnummer: **0 043 935**
**B1**

(12) **EUROPÄISCHE PATENTSCHRIFT**

(45) Veröffentlichungstag der Patentschrift: **15.06.83**

(21) Anmeldenummer: **81104691.1**

(22) Anmeldetag: **19.06.81**

(51) Int. Cl.³: **C 09 D 5/40,** C 08 G 59/40, C 08 C 19/36, C 08 G 59/62, C 08 G 14/00

(54) **Stickstoffbasische Gruppen tragendes Polyadditions/Polykondensationsprodukt und seine Verwendung.**

(30) Priorität: **16.07.80 DE 3026873**

(43) Veröffentlichungstag der Anmeldung: **20.01.82 Patentblatt 82/3**

(45) Bekanntmachung des Hinweises auf die Patenterteilung: **15.06.83 Patentblatt 83/24**

(84) Benannte Vertragsstaaten: **AT BE CH DE FR GB IT LI NL SE**

(56) Entgegenhaltungen:
**EP-A-0 002 499**
**EP-A-0 002 517**
**DE-A-2 944 082**

(73) Patentinhaber: **BASF Aktiengesellschaft, Carl-Bosch-Strasse 38, D-6700 Ludwigshafen (DE)**

(72) Erfinder: **Kempter, Fritz Erdmann, Dr., L 2,14, D-6800 Mannheim (DE)**
Erfinder: **Schupp, Eberhard, Dr., Tilsiter Weg 4, D-6830 Schwetzingen (DE)**

EP 0 043 935 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Stickstoffbasische Gruppen tragendes Polyadditions/Polykondensationsprodukt und seine Verwendung

Die vorliegende Erfindung betrifft durch Protonierung mit Säure wasserverdünnbare, stickstoffbasische Gruppen tragende Polyadditions/Polykondensationsprodukte aus Mannichbasen und Epoxidharz sowie deren Verwendung für die kathodische Elektrotauchlackierung.

Aus der DE-A-2 755 906 sind bereits Lackbindemittel bekannt, die durch Polyaddition von Mannichbase an Epoxidharz erhalten worden sind, wobei als Mannichbasen Kondensationsprodukte aus kondensiertem Phenol mit mindestens zwei phenolischen Hydroxylgruppen pro Molekül, einem

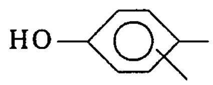 -gruppen

enthaltenden Butadien- oder Isopren-homo- oder -Copolymerisat, einem sekundären Amin mit Hydroxyalkylgruppe und Formaldehyd verwendet werden. Die hierfür verwendeten phenolmodifizierten Polybutadiene werden durch Umsetzung von Bisphenol A mit Polybutadien unter destillativer Entfernung des freigesetzten Phenols erhalten. Dabei werden C – C-Doppelbindungen verbraucht, was sich sowohl in einer Abnahme der Jodzahlen als auch in unerwünscht harten Endprodukten äußern kann.

Aufgabe der vorliegenden Erfindung ist es, stickstoffbasische Polyadditions/Polykondensationsprodukte aufzuzeigen, die sich ohne die aufwendige destillative Entfernung von Phenol herstellen lassen, ohne daß C – C-Doppelbindungen durch Cyclisierungsreaktionen verbraucht werden, so daß die damit verbundene negative Beeinflussung des Eigenschaftsbildes der erhaltenen Produkte vermieden wird.

Dieses Ziel läßt sich dadurch erreichen, daß zum Aufbau der Polyadditions/Polykondensationsprodukte zumindest teilweise ein- oder mehrkernige Mono- und/oder Polyphenole verwendet werden, die Gruppierungen der allgemeinen Formel (I)

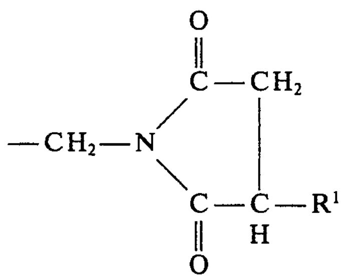 (I)

tragen, worin $R^1$ für einen Polydienylrest steht.

Gegenstand der vorliegenden Erfindung sind durch Protonierung mit Säure wasserverdünnbare, stickstoffbasische Gruppen tragende Polyadditions/Polykondensationsprodukte, erhalten durch Polyaddition von

(A) 10 bis 90 Gew.-% Mannichbasen aus
  (a) Mono- und/oder Polyphenolen,
  (b) mindestens einem sekundären Amin, das mindestens eine Hydroxyalkylgruppe enthält ($b_1$) oder einem Gemisch aus einem derartigen sekundären Amin mit einem anderen sekundären Amin ($b_2$) und
  (c) Formaldehyd oder einer Formaldehyd liefernden Verbindung
  mit

(B) 10 bis 90 Gew.-% mindestens eines Epoxidharzes, die dadurch gekennzeichnet sind, daß das Polyadditions/Polykondensationsprodukt aus (A) und (B) an aromatische Ringe gebundene Gruppen der Formel (I)

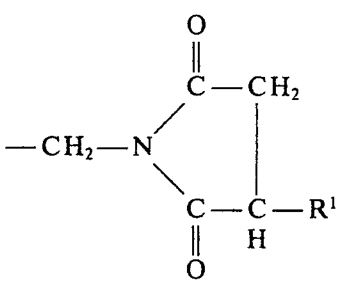 (I)

sowie gegebenenfalls Gruppen der allgemeinen Formel II

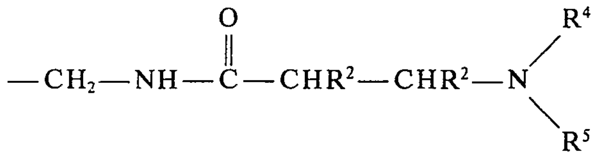

(II)

trägt, worin $R^1$ für einen Polydienylrest steht, $R^2$ und $R^3$ untereinander gleich oder verschieden sind und für Wasserstoff oder eine Methylgruppe stehen, $R^4$ und $R^5$ untereinander gleich oder verschieden sind und für einen Alkylrest mit 1 bis 9 Kohlenstoffatomen, eine Hydroxyalkyl- oder Alkoxyalkylgruppe mit 2 bis 10 Kohlenstoffatomen stehen oder miteinander zu einem 5- oder 6gliedrigen Ring verknüpft sind, wobei die Gruppen der allgemeinen Formel (I) durch die säurekatalysierte Tscherniac-Einhorn-Reaktion von Phenolen mit N-Methylol-bernsteinsäureimiden, die in $\alpha$-Stellung Polydienylreste tragen, eingeführt worden sind.

Bevorzugt werden zur Herstellung der Mannichbase (A) Mono- und/oder Polyphenole aus

($a_1$) mindestens einem ein- oder mehrkernigen Mono- und/oder Polyphenol, das zumindest teilweise durch

($a_2$) ein ein- oder mehrkerniges Mono- und/oder Polyphenol ersetzt ist, das Gruppen der allgemeinen Formel (I)

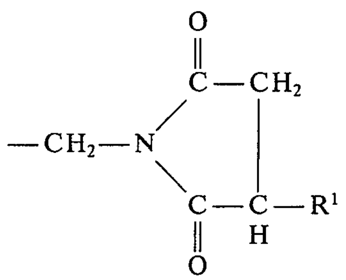

(I)

sowie gegebenenfalls Gruppen der allgemeinen Formel II trägt

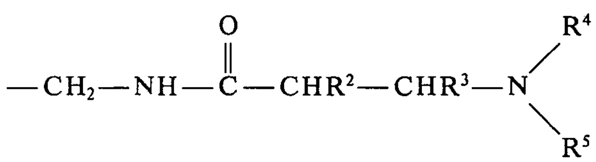

(II)

wobei $R^1$ bis $R^5$ die oben angegebene Bedeutung haben, verwendet.

Bevorzugt sind außerdem solche für deren Herstellung Polyadditions/Polykondensationsprodukte, als Komponente (B) Umsetzungsprodukte von Polyepoxidverbindungen mit geringeren als den äquivalenten Mengen an ein- oder mehrkernigen Mono- und/oder Polyphenolen ($a_2$) verwendet worden sind.

Bevorzugt ist die Verwendung von Diäthanolamin ($b_1$) oder eines Gemisches aus Diäthanolamin und einem anderen sekundären Amin als Komponente ($b_2$) sowie Umsetzungsprodukte ein- oder mehrkerniger Mono- und/oder Polyphenole mit N-Methylolpolydienylmaleinimiden sowie gegebenenfalls mit N-Methylol(meth)acrylamid, wobei im letzteren Fall an die C–C-Doppelbindungen des (Meth)-acrylamids sekundäre Amine addiert werden, als Komponente ($a_2$).

Der Polyadditionsreaktion geht immer eine Polykondensation voraus.

Die erfindungsgemäßen Polyadditions/Polykondensationsprodukte sind gegenüber den in der DE-A-2 755 906 beschriebenen Lackbindemitteln nicht nur einfacher herstellbar, da hierfür nicht die aufwendige Phenoldestillation nötig ist, sondern verlieren bei dem über die Tascherniak-Einhorn-Reaktion verlaufenden Einbau der Methylenpolydienylmaleinimidgruppen auch keine C–C-Doppelbindungen.

Hinsichtlich der als Eventualmaßnahme aufgeführten Einführung der Gruppen der allgemeinen Formel (II) ist festzustellen, daß an die C–C-Doppelbindungen der Gruppierung

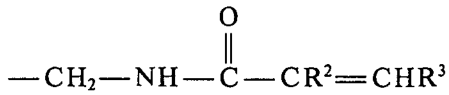

vor der Mannichreaktion sekundäre Amine addiert werden (Michael-Addition), wobei diese C – C-Doppelbindungen praktisch vollständig verbraucht werden.

Es ist z. B. aber auch möglich, der Tscherniak-Einhorn-Reaktion von Polybutadien-N-methylolmaleinimid und Acryl- bzw. Methacrylamid zunächst die Michael-Addition folgen zu lassen und dann die Phenolgruppen des resultierenden Reaktionsproduktes mit einem Überschuß an Polyepoxid umzusetzen und schließlich die noch vorhandenen Epoxidgruppen dieses Umsetzungsproduktes mit Mannichbasen zur Reaktion zu bringen.

Auch auf dem vorstehend beschriebenen Weg ist die Herstellung von die Gruppierung

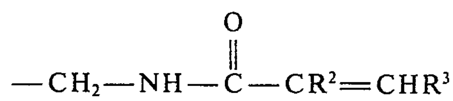

aufweisenden Reaktionsprodukten aus (A) und (B) möglich. Wegen der Möglichkeit der Reaktion mit Aminen, die bei der Herstellung und in den Lackbädern anwesend sein können, ist dieser Weg weniger vorteilhaft.

Zu den Aufbaukomponenten der erfindungsgemäßen Polyadditions/Polykondensationsprodukte ist im einzelnen folgendes auszuführen.

(A) Herstellung der Mannichbase

(a) Als ein- oder mehrkernige Mono- oder Polyphenole ($a_1$) kommen in Betracht: Phenol, seine Mono- bzw. Dialkylderivate mit 1 bis 18 Kohlenstoffatomen in den Alkylgruppen, z. B. o- und p-Kresol, p-tert.-Butylphenol, Naphthole, wie $\alpha$- und $\beta$-Naphthol, ®Cardanol, sowie insbesondere mehrwertige Phenole, die einen oder mehrere aromatische Reste enthalten, vorzugsweise Bisphenol A oder Novolake.

Besonders geeignet als Komponente (a) sind Phenole der allgemeinen Formel

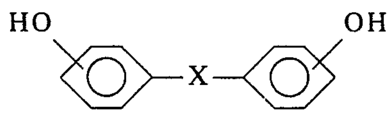

wobei die OH-Gruppen in ortho- und/oder para-Stellung zu X stehen und X für einen geradkettigen oder verzweigten zweiwertigen aliphatischen Rest mit 1 bis 3 Kohlenstoffatomen oder für $>SO_2$, $>SO$, $>S$, $>C=O$ und $-O-$ steht; vorzugsweise geeignet ist Bisphenol A. Weiterhin geeignet sind die Alkylderivate dieser mehrkernigen Phenole.

Zur Herstellung der erfindungsgemäßen Lackbindemittel eignet sich als Komponente (A) auch ein Mannichkondensationsprodukt aus mindestens einem Phenol und/oder Alkylphenol, primärem Amin und Formaldehyd oder Formaldehyd liefernden Verbindung, wie in der DE-A-2 711 385 beschrieben.

Geeignete Phenole zur Herstellung dieser Mannichkondensationsprodukte sind Phenol oder Alkylphenole, vorzugsweise Monoalkylphenole mit 1 bis 18, insbesondere 3 bis 12 Kohlenstoffatomen im geradkettigen, verzweigten oder cyclischen Alkylrest, wie Hexyl-, Nonyl-, Dodecyl-, tert.-Butyl- und Phenyl-phenol. Nonylphenol (z. B. auch technisches Nonylphenol mit 85% 4-Nonylphenol) und p-tert.-Butylphenol, sowie Gemische dieser Alkylphenole mit Phenol sind bevorzugt. Auch 3-Alkylenphenole, wie z. B. das aus Cashew-Nußschalenöl gewinnbare ®Cardanol, welches im wesentlichen aus 3-(8,11)-Pentadecadienyl)-phenol bestehend beschrieben wird, sind geeignet. Ein Teil des unsubstituierten Phenols kann auch durch Bisphenol A ersetzt sein. Als primäre Amine kommen in Frage Monoalkylamine mit 2 bis 13, vorzugsweise 2 bis 6 Kohlenstoffatomen im geradkettigen, verzweigten oder cyclischen Alkylrest, wie Butyl-, Hexyl-, Octyl-Amin sowie hydroxyl- und alkoxylsubstituierte Monoalkylamine, wie Monoäthanolamin und Monoisopropanolamin, 2-Alkoxyäthylamine, wie 2-Methoxyäthylamin und 2-Äthoxyäthylamin sowie Gemische dieser genannten Amine.

Zur Herstellung dieser als Komponente (a) verwendbaren Mannichkondensationsprodukte werden (Alkyl-)Phenol, primäres Amin und Formaldehyd oder Formaldehyd liefernde Verbindungen zweckmäßigerweise in solchen Mengen miteinander umgesetzt, daß auf 2 Mole (Alkyl-)Phenol mindestens 1 Mol des primären Amins kommen, entsprechend einer Mindestmenge von 2 Molen Formaldehyd.

Als Komponente (a) eignen sich außerdem phenolgruppenenthaltende Indanderivate gemäß der US-A-2 979 534, wie

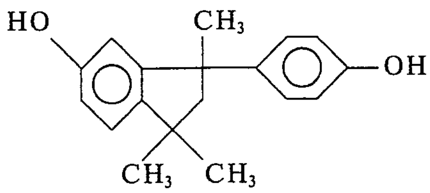

Komponente ($a_1$) ist erfindungsgemäß zumindest teilweise durch Komponente ($a_2$) ersetzt.

($a_2$) Komponente ($a_2$) ist ein ein- oder mehrkerniges Mono- und/oder Polyphenol, das Gruppen der allgemeinen Formel (I)

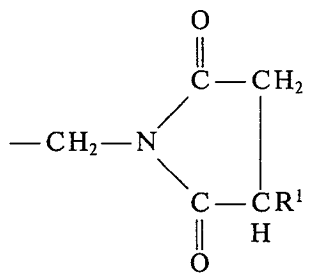 (I)

sowie gegebenenfalls Gruppen der allgemeinen Formel (II)

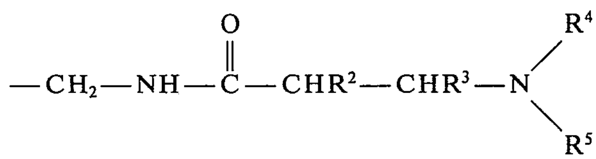 (II)

trägt, worin $R^1$ für einen Polydienylrest steht, $R^2$ und $R^3$ untereinander gleich oder verschieden sind und für Wasserstoff oder eine Methylgruppe stehen. Gruppen der allgemeinen Formel I sowie der Vorstufe der allgemeinen Formel II werden durch die säurekatalysierte Tscherniac-Einhorn-Reaktion von Phenolen mit den entsprechenden N-Methylol-bernsteinsäureimiden, die in $\alpha$-Stellung Polydienylreste tragen, bzw. N-Methylolamiden der Acryl- bzw. Methacrylsäure eingeführt, die im allgemeinen bei Temperaturen von 30 bis 150°C, vorzugsweise 50 bis 120°C durchgeführt wird.

Bernsteinsäureimide mit Polydienylgruppen in $\alpha$-Stellung werden im allgemeinen durch Reaktion von Polydienen mit Maleinsäureanhydrid und anschließende Umsetzung mit Ammoniak oder Ammoniak liefernden Verbindungen erhalten.

Als Polydiene kommen in Betracht Polymere des Butadiens, Isoprens, Chloroprens, Pentadiens-1,3, Cyclopentadiens, Piperylens, insbesondere aber die Polymeren des Butadiens mit einem mittleren Molekulargewicht von 200 bis 6000, vorzugsweise 500 bis 3000, sowie Copolymere des Butadiens mit z. B. Styrol, wobei die Produkte die übliche Feinstruktur hinsichtlich des Charakters der Doppelbindungen (Vinyl-1,2; Cis- und Trans-1,4 sowie cyclischer Anteile) aufweisen. Derartige geeignete Polydiene weisen im allgemeinen Jodzahlen von 100 bis 500, vorzugsweise 200 bis 450 auf.

Die Maleinisierung der Polydiene wird zweckmäßigerweise in Abhängigkeit vom mittleren Molekulargewicht des Polydiens mit den üblichen Mengen an Maleinsäureanhydrid (im allgemeinen 5 bis 25, vorzugsweise 10 bis 20%) nach bekannten Verfahren durchgeführt. Das gilt auch für die anschließende Überführung des Adduktes in das Imid mit Ammoniak oder einer Ammoniak liefernden Verbindung, beispielsweise Harnstoff (vgl. DE-A-2 728 470), Ammoniumcarbonat usw.

Durch den Einbau der Gruppierung (I) und gegebenenfalls (II) werden zusätzliche Vernetzungsmöglichkeiten geschaffen.

(b) Als sekundäre Amine (b) eignen sich solche der allgemeinen Formel

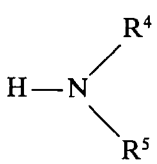

wobei $R^4$ und $R^5$ die oben angegebene Bedeutung haben.

Als sekundäre Amine ($b_1$), die mindestens eine Hydroxyalkylgruppe enthalten, eignen sich

beispielsweise Alkyläthanolamine oder Alkylisopropanolamine mit 1 bis 6 Kohlenstoffatomen in der Alkylgruppe. Bevorzugt sind jedoch Dialkanolamine, insbesondere Diäthanolamin sowie Gemische dieser (Di-)Alkanolamine mit anderen sekundären Aminen ($b_2$).
Die sekundären Amine ($b_1$), in den Mannichbasen (A) als Diäthanolaminomethylgruppen und Alkyläthanolaminomethylgruppen eingebaut, sind für den Grad der Dispergierbarkeit der Bindemittel in dem gewünschten pH-Bereich von 6,0 bis 10,0 und teilweise für die Vernetzung des Systems von wesentlicher Bedeutung.
Als sekundäre Alkylamine ($b_2$), die gegebenenfalls zusammen mit den Hydroxyalkylgruppenhaltigen Aminen für die Herstellung der Mannichbasen (A) eingesetzt werden, eignen sich solche der allgemeinen Formel

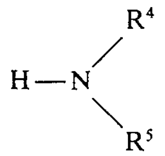

wobei $R^4$ und $R^5$ gleich oder verschieden sind und für einen geradkettigen oder verzweigten aliphatischen Rest mit 1 bis 9, vorzugsweise 3 bis 8 Kohlenstoffatomen, oder eine Alkoxyalkylgruppe mit 2 bis 10 Kohlenstoffatomen stehen, oder miteinander zu einem 5- oder 6gliedrigen Ring verknüpft sind. Derartige geeignete sekundäre Amine sind beispielsweise Di-n-butylamin, Di-n-propylamin, Diisopropylamin, Di-n-pentylamin, Di-n-hexylamin, Di-n-octylamin, Di-2-äthylhexylamin und Di-2-alkoxyäthylamine, wie z. B. Di-2-methoxy-, Di-2-äthoxy- oder Di-2-butoxy-äthylamin, sowie Piperazine, wie z. B. N-Hydroxyethylpiperazin oder auch Morpholin, Piperidin sowie vorzugsweise auch N,N,N'-Trimethylalkylendiamine.
Die sekundären Amine (b) sind sowohl für die Herstellung der Mannichbasen als auch für die gegebenenfalls durchzuführende Michael-Addition zu verwenden.
Bevorzugt geeignet sind von diesen gegebenenfalls mitzuverwendenden sekundären Aminen auch Di-n-butylamin, Di-n-hexylamin und Di-n-octylamin, Di-2-äthylhexylamin sowie Di-2-alkoxyäthylamine und ihre Gemische. Die Wirkungsweise dieser sekundären Amine ($b_2$) besteht vornehmlich in der Beeinflussung der Stabilitätseigenschaften der Bindemittel, außerdem tragen sie zum Verlauf und zur »inneren Weichmachung« der aus den Bindemitteln hergestellten Lackschichten bei.

(c) Als Formaldehyd bzw. Formaldehyd liefernde Verbindungen werden vorzugsweise alkoholische, wie z. B. butanolische Formaldehydlösungen oder Paraformaldehyd oder deren Gemische verwendet.

Die Herstellung der Mannichbasen (A) erfolgt nach den üblichen in der Literatur angegebenen Methoden, wie z. B. Houben-Weyl, Methoden der organischen Chemie, Band XI/1, Seite 731, 1957, zu entnehmen ist. Die Wahl der Lösungsmittel wird den geänderten Polaritätsverhältnissen angepaßt. Es ist zweckmäßig, höhere Alkohole, Cycloaliphaten oder Alkylaromaten neben polaren Lösungsmittel mitzuverwenden.
Die Mengenverhältnisse der eingesetzten Ausgangsstoffe ergeben sich aus den jeweils angestrebten Eigenschaften, wobei das Gewichtsverhältnis der Komponente ($a_1$) zur Komponente ($a_2$) 1 : 0,1 bis 1 : 20, bevorzugt 1 : 0,5 bis 1 : 15 und das Gewichtsverhältnis der sekundären hydroxylgruppenhaltigen Amine zu anderen sekundären Alkylaminen 1 : 0 bis 1 : 3 betragen kann.
Die Mengenverhältnisse der Ausgangsstoffe ($a_1$), ($a_2$) und (b) werden zur Herstellung der Mannichbase (A) zweckmäßigerweise so gewählt, daß auf jede phenolische Hydroxylgruppe des Gemisches der Komponenten ($a_1$) und ($a_2$) etwa 0,3 bis 2,0, vorzugsweise 0,5 bis 1,5 Mol der Komponente (b) kommen.
Die zur Herstellung der Mannichbase (A) einzusetzende Menge an (c) beträgt mindestens 1 Mol, bezogen auf 1 Mol (b).
Durch Variation der Mengenverhältnisse der sekundären Amine lassen sich die Eigenschaften der erfindungsgemäßen Polyadditions/Polykondensationsprodukte, insbesondere die Elektrotauchbad- und Schicht-Eigenschaften wunschgemäß beeinflussen: Über das gewählte Mengenverhältnis Diäthanolamin bzw. Alkyläthanolamin und Di-n-butylamin, Di-n-hexylamin, Di-2-äthylhexylamin, Di-n-octylamin und Di-2-alkoxyäthylamin können die Dispergierbarkeit des Bindemittels, die Reaktivität, Verlaufseigenschaften, Vernetzung, Elastizität sowie der Korrosionsschutz eingestellt werden.
Eine besonders bevorzugte Ausführungsform der vorliegenden Erfindung besteht darin, daß die Herstellung der Mannichbasen mit einer formaldehydliefernden Verbindung, z. B. Paraformaldehyd, in Mengen, die dem verwendeten Aminanteil praktisch äquivalent sind, im allgemeinen jedoch einen 25%igen Überschuß nicht überschreiten, in einem Alkohol, wie Isopropanol oder Isobutanol, durchgeführt wird und daß die Komponente (A) direkt, d. h. ohne nachfolgende Umsetzung mit weiterem Formaldehyd mit der Komponente (B) zur Reaktion gebracht wird.

Im allgemeinen wird die Umsetzung der Komponente (A) mit der Komponente (B) so gesteuert, daß die entstehenden erfindungsgemäßen Polyadditions/Polykondensationsprodukte mittlere Molekulargewichte von 800 bis 5000, vorzugsweise 1000 bis 3000 aufweisen.

Die Umsetzung der Komponente (A) mit der Komponente (B) erfolgt im allgemeinen bei Temperaturen von 20 bis 100°C, vorzugsweise von 60 bis 80°C, bevorzugt in organischen Lösungsmitteln, wie z. B. Alkoholen mit 3 bis 6 Kohlenstoffatomen in der Alkylgruppe und Glykoläther sowie Alkylaromaten wie Toluol usw. und Cycloaliphaten. Dieser Temperaturbereich wird zweckmäßigerweise für die Michael-Reaktion gewählt.

Die Mannichkondensationsprodukte (A) werden zur Herstellung der erfindungsgemäßen Elektrotauchlackbindemittel in einer Menge von 10 bis 90 Gew.-%, vorzugsweise 20 bis 60 Gew.-%, mit 10 bis 90 Gew.-%, vorzugsweise 40 bis 80 Gew.-%, Epoxidharz (B) umgesetzt. Durch den Grad der Verätherung der phenolischen Komponenten ($a_1$ und $a_2$) mit dem Epoxidharz (B) können insbesondere die Stabilitäts-, aber auch andere wesentliche Eigenschaften, wie z. B. die Spannungsfestigkeiten, beeinflußt werden.

(B) Als Epoxidharze kommen die üblichen Polyepoxidverbindungen in Frage, vorzugsweise Polyepoxid-Verbindungen mit 2 bis 3 Epoxidgruppen im Molekül, wie z. B. Umsetzungsprodukte von mehrwertigen Phenolen, besonders solchen der unter ($a_1$) erwähnten Formel

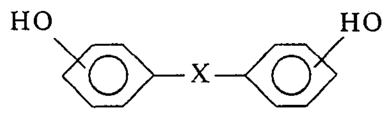

mit Epichlorhydrin, aber auch die obenerwähnten Reaktionsprodukte von mehrwertigen Alkoholen, wie z. B. Pentaerythrit, Trimethylolpropan oder Glycerin mit Epichlorhydrin. Geeignet sind alle gegebenenfalls Äthergruppen enthaltenden Di- oder Polyole, die nach der Einführung des Glycidylrestes noch freie OH-Gruppen besitzen, oder völlig frei von alkoholischen OH-Gruppen sind. Weiterhin eignen sich epoxidgruppenhaltige Umsetzungsprodukte von Epoxidharzen mit primären oder sekundären Aminen oder hydroxylgruppenhaltigen Glykoläthern; ferner Epoxidharze, die Heteroatome, wie Schwefel, eingebaut enthalten. Geeignet sich auch geblockte Urethangruppen-enthaltende Epoxidharze, wie sie in der DE-A-2 554 080 und 2 541 801 beschrieben sind. Ganz allgemein sind alle Harzkörper geeignet, die 1,2-Epoxidgruppen enthalten und sich aus der Klasse der Polyacrylat-, Polyäther-, Polyester- und Polyurethan-Harze sowie von Polybutadien- und anderen Ölen herleiten.

Andere geeignete Verbindungen aus Harzen mit Epoxidgruppen sind stickstoffhaltige Diepoxide, wie sie beschrieben sind in der US-A-3 365 471, Epoxyharze von 1,1-Methylen-bis-(5-substituiertem Hydantoin) (US-A-3 391 097), Diepoxide mit Bis-imiden (US-A-3 450 711), epoxydierte Aminomethyldiphenyloxide (US-A-3 312 664), aliphatische und heterocyclische N,N'-Diglycidylverbindungen (z. B. nach US-A-3 503 979), Aminoepoxyphosphonate (GB-A-1 172 916), 1,3,5-Triglycidylisocyanurate und andere in der Technik bekannte Materialien, die Epoxidgruppen enthalten.

Um die zur Harzbildung aus den Komponenten (A) und (B) bevorzugte höhere Funktionalität der Komponente (B) sicherzustellen, kann (B) gegebenenfalls mit Diisocyanaten, wie Hexamethylendiisocyanat, Toluylendiisocyanat oder Polyisocyanat umgesetzt werden. Beispielsweise können Epoxidverbindungen die eine Epoxidgruppe besitzen, aber noch andere funktionelle Gruppen, z. B. OH-Gruppen tragen, mit Diisocyanaten umgesetzt werden. Gegebenenfalls können die Epoxidharze mit partiell blockierten Di- und Polyisocyanaten weiter umgesetzt werden.

Das erfindungsgemäße, aus den Komponenten (A) und (B) erhaltene Polyadditions/Polykondensationsprodukt ist im wesentlichen epoxidgruppenfrei und sollte zum Zeitpunkt der Verarbeitung nicht mehr als 0,5 Epoxidgruppen pro Molekül Umsetzungsprodukt enthalten. Gegebenenfalls können die nach der Herstellung des Bindemittels überschüssigen Epoxidgruppen durch Mercaptane und/oder Säuren entfernt werden.

Das erfindungsgemäße Polyadditions/Polykondensationsprodukt (Festharz) enthält im allgemeinen 1 bis 35, vorzugsweise 3 bis 25 Gewichtsprozent der Gruppierung (I) und bis zu 20 Gew.-% der Gruppierung (II).

Zusätze zu den erfindungsgemäßen Polyadditions/Polykondensationsprodukten können Polybutadienöle oder andere Kohlenwasserstofföle sowie blockierte Urethangruppen aufweisende Verbindungen sein, wie sie z. B. in der DE-A-2 711 425 und DE-A-2 755 907 beschrieben worden sind. Außerdem sind Bindemittel nach DE-A-2 606 831 geeignet.

Die erfindungsgemäßen Polyadditions/Polykondensationsprodukte können mit üblichen Lacklösungsmitteln, wie Alkoholen von einer Kettenlänge von $C_4$ bis $C_{16}$, z. B. Isopropanol, Dekanol, n- und iso-Butanol, Alkylaromaten, z. B. Toluol und Cycloaliphaten oder mit wäßrigen organischen Lösungsmittel(gemischen) verdünnt, gegebenenfalls zusammen mit Pigmenten, Füllstoffen und üblichen Hilfsmitteln unter Anwendung konventioneller Lackiermethoden, wie Spritzen, Tauchen,

Fluten, auf das zu überziehende bzw. zu lackierende Substrat, wie z. B. auf Holz, Metall, Glas oder Keramik, aufgetragen, getrocknet und bei Temperaturen von über 170° C gehärtet werden. Die damit erhaltenen Überzüge zeichnen sich beispielsweise durch hohe Härte und Lösungsmittelbeständigkeit aus.

Bevorzugt werden die erfindungsgemäßen Lackbindemittel, jedoch mit Säuren, wie z. B. Phosphorsäure und ihre Derivate, vorzugsweise mit wasserlöslichen Carbonsäuren, wie z. B. Essigsäure, Ameisensäure, Milchsäure, protoniert angewandt. Das protonierte Lackbindemittel ist wasserverdünnbar und kann unter Anwendung der oben angeführten konventionellen Lackiermethoden verarbeitet werden, wobei ebenfalls Überzüge mit sehr wertvollen Eigenschaften erhalten werden. Der Protonierungsgrad soll jedoch so gering wie möglich gehalten werden.

Die bevorzugte Verwendung der protonierten erfindungsgemäßen Lackbindemittel ist die kathodische Elektrotauchlackierung elektrisch leitender Flächen, z. B. von Metallteilen, Blechen usw. aus Messing, Kupfer, Aluminium, Eisen und Stahl, die gegebenenfalls chemisch vorbehandelt, z. B. phosphatiert sind.

Die wäßrigen Lösungen oder Dispersionen der zumindest teilweise als Salz einer wasserlöslichen Carbonsäure vorliegenden erfindungsgemäßen Lackbindemittel können auch im Gemisch mit diesen durch Kataphorese elektrochemisch abscheidbare Hilfsstoffe enthalten, wie Pigmente, lösliche Farbstoffe, Lösungsmittel, Verlaufsverbesserer, Stabilisatoren, Härtungskatalysatoren, besonders die antoxidative Härtung beschleunigende metallhaltige Mangan- bzw. Kobaltaphthenate oder -octoate, außerdem Metallsalze, wie sie zum bekannten Stand der Technik gehören und z. B. in der DE-A-2 541 234 und DE-A-2 457 457 genannt sind, Antischaummittel sowie andere Hilfs- und Zusatzstoffe.

Die erfindungsgemäßen Lackbindemittel können sowohl als Hauptträgerharz für die elektrische Abscheidung als auch als Trägerharz in der Pigmentpaste benutzt werden. Alternativ kann das Harz als Hauptträgerharz für die elektrisch abzuscheidende Masse in Kombination mit einer üblichen Pigmentpaste verwendet werden. Außerdem kann das Harz als Trägerharz in einer Pigmentpaste in Kombination mit einem bekannten polyamingruppenhaltigen Trägerharz für die kathodisch elektrische Abscheidung verwendet werden. Die amingruppenhaltigen, kationisch abscheidbaren Harze sind bekannt und müssen deshalb nicht im einzelnen beschrieben werden. Beispiele von geeigneten Harzen schließen tertiäre aminsalzhaltige Harze ein, wie sie in der DE-A-2 603 666 offenbart sind und quaternäre ammoniumsalzgruppenhaltige Harze, wie sie in der US-A-3 839 252 beschrieben sind.

Zur kathodischen Elektrotauchlackierung wird im allgemeinen durch Verdünnen mit entionisiertem Wasser ein Feststoffgehalt des Elektrotauchbades von 5 bis 20 Gew.-% eingestellt. Die Abscheidung erfolgt im allgemeinen bei Temperaturen von 15 bis 40° C während einer Zeit von 1 bis 2 Minuten bei Bad-pH-Werten von 6,0 bis 10,2, vorzugsweise pH 7,0 bis 9,5, bei Abscheidungsspannungen zwischen 50 und 500 Volt. Nach dem Abspülen des auf dem elektrisch leitenden Körper kathodisch abgeschiedenen Films wird dieser bei etwa 150 bis 220° C 10 bis 30 Minuten, vorzugsweise bei 170 bis 200° C 20 Minuten gehärtet.

Die erfindungsgemäßen Polyadditions/Polykondensationsprodukte ergeben bei der kathodischen Abscheidung Überzüge mit hervorragenden mechanischen Eigenschaften, wie große Härte und Kratzfestigkeit, bei sehr guter Elastizität und fester Haftung auf dem Substrat.

Weiterhin zeichnen sich die damit erhaltenen Überzüge durch hohe Lösungsmittelbeständigkeit und Beständigkeit im Salzsprühtest aus.

Die in den Beispielen genannten Teile und Prozente sind Gewichtsteile bzw. Gewichtsprozente.

## Beispiel 1

a) Herstellung des Polybutadienmaleinimids

825 Teile eines Polybutadienöls der Jodzahl 420 und der Struktur 40 bis 50% 1,2-Vinyl, 30 bis 35% Trans-1,4- und 25 bis 30% Cis-1,4-Gruppen (MG. ca. 900), (z. B. Lithene PL der Fa. Metallgesellschaft), 175 Teile Maleinsäureanhydrid, 50 Teile Xylol und 0,1 Teil N,N-Diphenyl-1,4-phenylendiamin werden bei 170° C 1 Stunde und anschließend bei 190° C 6 Stunden unter Stickstoffspülung zur Reaktion gebracht. Danach werden bei 160° C 43,5 Teile Harnstoff in ca. 1 Stunde zudosiert. Bei 190° C läßt man 3 Stunden weiterrühren und kreist währenddessen Wasser aus. Dann erfolgt bei 120° C die Zugabe von 227 Teilen Toluol, 51,5 Teilen Paraformaldehyd, 598,2 Teilen Bisphenol A und 0,17 Teilen Phenothiazin. Nach 2,5 Stunden Reaktion bei 120° C werden 2,4 Teile p-Toluolsulfonsäure, gelöst in 15,2 Teilen Isopropanol, zugetropft und man läßt weitere 2 Stunden bei 120° C nachrühren. Mit 290,3 Teilen Toluol wird der Versuch auf einen theor. Feststoffgehalt von 75% eingestellt. Der prakt. Feststoffgehalt beträgt 75,5%.

b) Herstellung des Polyadditions/Polykondensationsproduktes

Es werden 77,4 Teile Diethanolamin, 59 Teile Di-n-butylamin, 93 Teile des unter a) hergestellten Polybutadienmaleinimids, 104,5 Teile Bisphenol A, 60 Teile Isobutanol und 41 Teile Paraformaldehyd 15 Minuten bei 50° C gerührt und anschließend 2,5 h bei 80° C weitergerührt. Dann erfolgt die

Zugabe von 70 Teilen eines Glycidylethers aus Bisphenol A und Epichlorhydrin (z. B. Epoxi 1/33 der Fa. Chemapol CSSR) mit einem Epoxidwert von 0,2, 51 Teilen eines Diglydicylethers aus Bisphenol A und Epichlorhydrin (z. B. Epikote 162 der Fa. Shell) mit einem Epoxidwert von 0,62, 32 Teilen Isopropanol und 32 Teilen Ethylglykol. Bei 70°C läßt man den Versuch nachreagieren, bis eine Viskosität von 600 m · Pas (gemessen mit dem ICI Platte-Konus-Viskosimeter bei 75°C) erreicht ist. Reaktionszeit ca. 4$^1/_4$ Stunden ([). Die Reaktion wird dann durch Zugabe von 2,7 Teilen Merkaptoethanol, 70 Teilen vollentsalztem Wasser und 0,5 Teilen Essigsäure abgebrochen. Der Feststoffgehalt des Bindemittels beträgt 63,6%.

c) Elektrotauchlackierung und Prüfung
Zur Herstellung eines 10%igen Lackbades werden 100 Teile des nach b) erhaltenen Harzes (ber. fest) mit 1,4% Essigsäure protoniert und mit vollentsalztem Wasser auf 1000 Teile verdünnt. Das Lackbad wird 48 Stunden bei 30° C gerührt, es weist einen pH-Wert von 8,0 und einen Leitwert von $1{,}2 \cdot 10^{-3}$ S · cm$^{-1}$ auf. Nach dem Ausrühren erfolgt die Zugabe von 100 ppm Kupfer (berechnet auf Badvolumen) als wäßrige Kupferacetatlösung. Auf phosphatierten Stahlblechen erhält man nach der Abscheidung (2 Minuten 80 Volt bei 30°C) und Härtung (20 Minuten bei 180°C) einen glatten Überzug mit einer Schichtdicke von 15 µm. Abschließend erfolgt eine weitere Zugabe von 300 ppm Blei (berechnet auf Badvolumen) als wäßrige Bleiacetatlösung. Auf phosphatierten Stahlblechen erhält man nach der Abscheidung (2 Minuten/80 Volt bei 30°C) und Härtung (20 Minuten bei 180°C) einen glatten Überzug mit einer Schichtdicke von 15 µm. Auf nicht vorbehandelten Stahlble ,nen erhält man nach der Abscheidung (2 Minuten/20 Volt bei 30° C) und Härtung (20 Minuten bei 180° C) einen Überzug von 15 bis 20 µm. Die Korrosionsprüfung nach DIN 50 021 ergab nach 14 Tagen bei den nach der Kupferzugabe beschichteten eisenphosphatierten Stahlblechen (Bonder® 1041 WL), die wassernachgespült und luftgetrocknet waren, eine Unterwanderung von 0,8 bis 1,5 mm (gemessen vom Schnitt). Die nach der Kupfer- und Bleizugabe beschichteten, eisenphosphatierten Stahlbleche, die wassergespült und luftgetrocknet waren (Bonder® 1041 WL) hatten eine Unterwanderung von 0,3 bis 2,3 mm, die nicht vorbehandelten Stahlbleche eine Unterwanderung von 1,5 mm (gemessen vom Schnitt).

## Beispiel 2

a) 825 Teile des in Beispiel 1 unter a) genannten Polybutadienöls, 175 Teile Maleinsäureanhydrid, 50 Teile Xylol und 0,1 Teil N,N-Diphenyl-1,4-phenylendiamin werden bei 170°C 1 Stunde und anschließend bei 190° C 6 Stunden unter Stickstoffspülung zur Reaktion gebracht. Danach werden bei 160° C 43,5 Teile Harnstoff in ca. 1 Stunde zudosiert. Bei 190° C rührt man weitere 3 h. Während dieser Zeit wird das Wasser ausgekreist. Dann erfolgt bei 120° C die Zugabe von 227 Teilen Toluol, 51,5 Teilen Paraformaldehyd, 598,2 Teilen Bisphenol A und 0,17 Teilen Phenothiazin. Nach 2,5 Stunden Reaktion bei 120°C werden 2,4 Teile p-Toluolsulfonsäure, gelöst in 15,2 Teilen Isopropanol, zugetropft und man läßt weitere 2 Stunden bei 120°C nachrühren. Mit 290,3 Teilen Toluol wird der Versuch auf einen theor. Feststoffgehalt von 75% eingestellt. Der prakt. Feststoffgehalt beträgt 75,5%.

b) Herstellung eines urethanhaltigen Epoxidharzes
Zu 651 Teilen eines Diglycidylethers aus Bisphenol A und Epichlorhydrin (Epikote 162 der Fa. Shell) mit einem Epoxidwert von 0,62 werden bei 90°C 387,7 Teile eines halbblockierten Toluylendiisocyanats, das aus 273,6 Teilen Toluylendiisocyanat 80/20 durch Zugabe von 157,2 Teilen Cyclohexanol bei 90° C während einer Stunde und 15minütigem Nachreagieren bei dieser Temperatur erhalten wurde, in 1 Stunde zugetropft. Man läßt 1 Stunde bei 90° C nachrühren und verdünnt mit 311,3 Teilen Ethylglykol auf einen Feststoffgehalt von 77,0%.

$b_2$) Herstellung eines Polyadditions/Polykondensationsproduktes
Es werden 104,5 Teile Bisphenol A, 59 Teile Di-n-butylamin, 15,5 Teile Paraformaldehyd, 120,5 Teile des unter a) hergestellten Polybutadienmaleinimids und 60 Teile Isobutanol bei 80° C 75 Minuten zur Reaktion gebracht. Dann erfolgt die Zugabe von 77 Teilen eines Glycidylethers aus Bisphenol A und Epichlorhydrin (z. B. Epoxi 1/33 der Fa. Chemapol, CSSR) mit einem Epoxidwert von 0,2. Man läßt dann weitere 2 Stunden bei 80°C nachreagieren. Danach werden 25,5 Teile Paraformaldehyd zugegeben und 77,5 Teile Diethanolamin in 10 Minuten zugetropft. Nach der Zugabe läßt man nochmals 2 Stunden bei 80°C nachrühren. Anschließend erfolgt die Zugabe von 114 Teilen des geblockten urethanhaltigen Epoxidharzes $b_1$) und 31 Teilen Ethylglykol. Bei 70°C läßt man weiterreagieren, bis eine Viskosität von 1450 m · Pas (gemessen mit dem ICI Platte-Konus-Viskosimeter bei 75° C) erreicht ist (Reaktionszeit ca. 3,5 Stunden). Die Reaktion wird dann durch Zugabe von 1 Teil Merkaptoethanol, 0,9 Teilen Essigsäure und 70 Teilen VE-Wasser abgebrochen. Der Feststoffgehalt des Bindemittels beträgt 65,4%.

c) Elektrotauchlackierung und Prüfung
Zur Herstellung eines 10%igen Lackbades werden 100 Teile des nach $b_2$) erhaltenen Harzes (fest) mit 2% Essigsäure protoniert und mit vollentsalztem Wasser auf 1000 Teile verdünnt. Das Lackbad wird 48 Stunden bei 30°C gerührt; es weist einen pH-Wert von 7,4 und einen Leitwert von $1{,}65 \cdot 10^{-3}$ S $\cdot$ $cm^{-1}$ auf. Nach dem Ausrühren erfolgt die Zugabe von 100 ppm Kupfer (berechnet auf Badvolumen) als wäßriger Kupferacetatlösung. Auf phosphatierten Stahlblechen erhält man nach der Abscheidung (2 Minuten/100 Volt bei 30°C) und Härtung (20 Minuten bei 180°C) einen glatten Überzug mit einer Schichtdicke von 15 µm. Auf nicht vorbehandelten Stahlblechen erhält man nach der Abscheidung (2 Minuten/75 Volt bei 30°C) und Härtung (20 Minuten bei 180°C) einen glatten Überzug mit einer Schichtdicke von 17 µm. Anschließend erfolgt eine weitere Zugabe von 300 ppm Blei (berechnet auf Badvolumen) als wäßrige Bleiacetatlösung. Auf phosphatierten Stahlblechen erhält man nach der Abscheidung (2 Minuten/110 Volt bei 30°C) und Härtung (20 Minuten bei 180°C) einen glatten Überzug mit einer Schichtdicke von 15 µm.
Die Korrosionsprüfung nach DIN 50 021 ergab nach 14 Tagen bei den nach der Kupferzugabe beschichteten eisenphosphatierten Stahlblechen, die wassernachgespült und luftgetrocknet waren (Bonder® 1041 WL) eine Unterwanderung von 0,7 bis 2,2 mm. Die nicht vorbehandelten Stahlbleche zeigten eine Unterwanderung von 1,8 bis 4 mm (gemessen vom Schnitt). Die nach der Kupfer- und Bleizugabe beschichteten eisenphosphatierten Stahlbleche, die wassernachgewaschen und luftgetrocknet waren (Bonder® 1041 WL), zeigten eine Unterwanderung von 0,5 bis 1,5 mm.

**Patentansprüche**

1. Durch Protonierung mit Säure wasserverdünnbares, stickstoffbasische Gruppen tragendes Polyadditions/Polykondensationsprodukt, erhalten durch Polyaddition von

(A) 10 bis 90 Gew.-% Mannichbasen aus
  (a) Mono- und/oder Polyphenolen,
  (b) mindestens einem sekundären Amin, das mindestens eine Hydroxyalkylgruppe enthält ($b_1$) oder einem Gemisch aus einem derartigen sekundären Amin mit einem anderen sekundären Amin ($b_2$) und
  (c) Formaldehyd oder einer Formaldehyd liefernden Verbindung mit
(B) 10 bis 90 Gew.-% mindestens eines Epoxidharzes,

dadurch gekennzeichnet, daß das Polyadditions/Polykondensationsprodukt aus (A) und (B) an aromatische Ringe gebundene Gruppen der Formel (I)

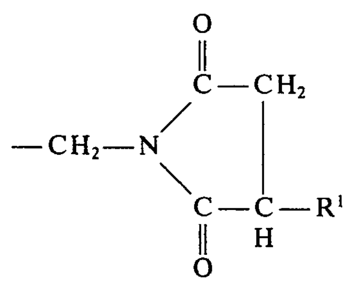
(I)

sowie gegebenenfalls Gruppen der allgemeinen Formel II

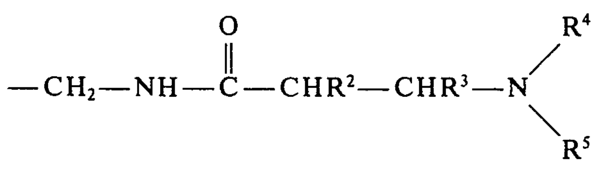
(II)

trägt, worin $R^1$ für einen Polydienylrest steht, $R^2$ und $R^3$ untereinander gleich oder verschieden sind und für Wasserstoff oder eine Methylgruppe stehen, $R^4$ und $R^5$ untereinander gleich oder verschieden sind und für einen Alkylrest mit 1 bis 9 Kohlenstoffatomen, eine Hydroxyalkyl- oder Alkoxyalkylgruppe mit 2 bis 10 Kohlenstoffatomen stehen oder miteinander zu einem 5- oder 6gliedrigen Ring verknüpft sind, wobei die Gruppen der allgemeinen Formel (I) durch die säurekatalysierte Tscherniac-Einhorn-Reaktion von Phenolen mit N-Methylol-bernsteinsäureimiden, die in α-Stellung Polydienylreste tragen, eingeführt worden sind.

2. Polyadditions/Polykondensationsprodukt nach Anspruch 1, dadurch gekennzeichnet, daß die zur

Herstellung der Mannichbase (A) verwendete Komponente ($b_1$) Diäthanolamin oder ein Gemisch aus Diäthanolamin und einem anderen sekundären Amin ($b_2$) ist.

3. Polyadditions/Polykondensationsprodukt nach Anspruch 1 oder 2, dadurch gekennzeichnet, daß die zur Herstellung der Mannichbase (A) verwendeten Mono- und/oder Polyphenole bestehen aus

($a_1$) mindestens einem ein- oder mehrkernigen Mono- und/oder Polyphenol, das zumindest teilweise durch
($a_2$) ein ein- oder mehrkerniges Mono- und/oder Polyphenol ersetzt ist, das Gruppen der allgemeinen Formel (I)

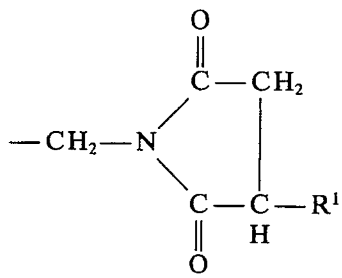

(I)

sowie gegebenenfalls Gruppen der allgemeinen Formel (II) trägt,

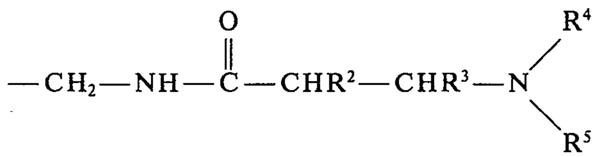

(II)

wobei $R^1$ bis $R^5$ die oben angegebene Bedeutung haben.

4. Polyadditions/Polykondensationsprodukt nach Anspruch 1 oder 2, dadurch gekennzeichnet, daß die Komponente (B) durch Umsetzung von Polyepoxidverbindungen mit geringeren als den äquivalenten Mengen an ein- oder mehrkernigen Mono- und/oder Polyphenolen ($a_2$) hergestellt werden.

5. Verwendung des Polyadditions/Polykondensationsproduktes nach einem der vorhergehenden Ansprüche zur kathodischen Elektrotauchlackierung metallischer Gegenstände.

**Claims**

1. A polyadduct/polycondensate which is water-dilutable when protonated with an acid and which contains basic nitrogen groups, the product being obtained by polyaddition reaction of

(A) from 10 to 90% by weight of a Mannich base obtained from
 (a) monophenols and/or polyphenols,
 (b) one or more secondary amines which contain one or more hydroxyalkyl groups ($b_1$), or a mixture of such a secondary amine with another secondary amine ($b_2$), and
 (c) formaldehyde or a formaldehyde donor, with
(B) from 10 to 90% by weight of one or more epoxy resins,

wherein the polyadduct/polycondensate of (A) with (B) contains groups, bonded to aromatic rings, of the formula (I)

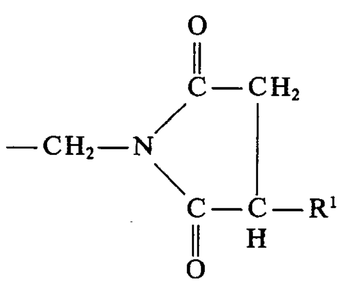

(I)

with or without groups of the general formula II

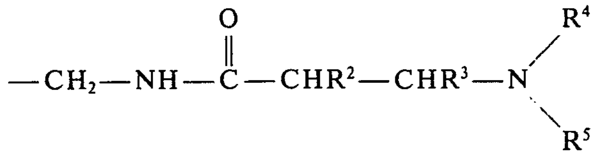

(II)

where $R^1$ is a polydienyl radical, $R^2$ and $R^3$ are identical or different and each is hydrogen or methyl and $R^4$ and $R^5$ are identical or different and each is alkyl of 1 to 9 carbon atoms or hydroxyalkyl or alkoxyalkyl of 2 to 10 carbon atoms, or which are linked to one another to form a 5-membered or 6-membered ring, the groups of the general formula (I) having been introduced by the acid-catalyzed Tcherniac-Einhorn reaction of a phenol with an N-methylol-succinimide bearing a polydienyl radical in the $\alpha$-position.

2. A polyadduct/polycondensate as claimed in claim 1, wherein the component used to prepare the Mannich base (A) is either ($b_1$) diethanolamine or a mixture of diethanolamine and another secondary amine ($b_2$).

3. A polyadduct/polycondensate as claimed in claim 1 or 2, wherein the monophenols or polyphenols, or mixtures of monophenols and polyphenols, used to prepare the Mannich base (A) are

($a_1$) one or more mononuclear or polynuclear monophenols and/or polyphenols, of which at least a proportion is replaced by
($a_2$) a mononuclear or polynuclear monophenol and/or polyphenol which contains groups or the general formula (I)

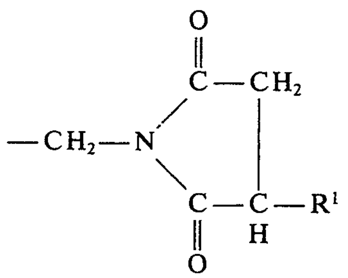

(I)

with or without groups of the general formula (II)

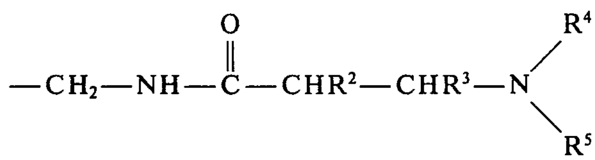

(II)

where $R^1$ to $R^5$ have the above meanings.

4. A polyadduct/polycondensate as claimed in claim 1 or 2, wherein component (B) is prepared by reacting a polyepoxide compound with a less than equivalent amount of mononuclear or polynuclear monophenols and/or polyphenols ($a_2$).

5. The use of a polyadduct/polycondensate as claimed in any of the preceding claims for the cathodic electrocoating of metallic articles.

**Revendications**

1. Produit de polyaddition/polycondensation portant des groupes à base azotée, diluables dans l'eau par protonation avec un acide, obtenu par polyaddition de

A) 10 à 90% en poids de base de Mannich constitué par
   a) des mono- et/ou polyphénols
   b) au moins une amine secondaire qui contient au moins un groupe hydroxyalkyle, ($b_1$) ou un mélange d'une telle amine secondaire avec une autre amine secondaire ($b_2$) et
   c) du formaldéhyde ou un composé fournissant du formaldéhyde, avec
B) 10 à 90% en poids d'au moins une résine époxyde, caractérisé par le fait que le produit de

polyaddition/polycondensation de (A) et (B) porte des groupes de formule I liés à un noyau aromatique

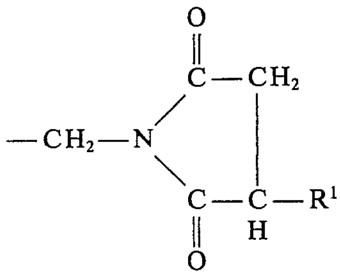

(I)

ainsi qu'éventuellement des groupes de formule générale (II)

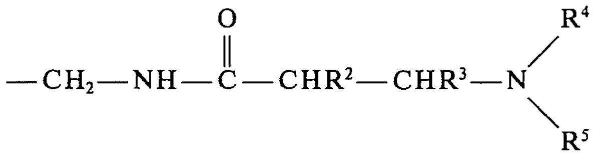

(II)

où $R^1$ représente un reste polydiène,

$R^2$ et $R^3$ sont identiques ou différents l'un de l'autre et représentent l'hydrogène ou un groupe méthyle, $R^4$ et $R^5$ sont identiques ou différents l'un de l'autre et représentent un reste alkyle à 1 à 9 atomes de carbone, un groupe hydroxyalkyle ou alcoxyalkyle à 2 à 10 atomes de carbone ou sont liés l'un à l'autre pour former un noyau à 5 ou 6 membres, les groupes de formule générale I ayant été introduits par la réaction de Tscherniac-Einhorn, catalysée par acide, de phénols avec des imides d'acide N-méthylol-succinique qui portent des restes polydiène en position $\alpha$.

2. Produit de polyaddition/polycondensation selon la revendication 1, caractérisé par le fait que le composant ($b_1$) utilisé pour la préparation de la base de Mannich (A) est la diéthanolamine ou un mélange de diéthanolamine et d'une autre amine secondaire ($b_2$).

3. Produit de polyaddition/polycondensation selon la revendication 1 ou 2, caractérisé par le fait que les mono- et/ou polyphénols utilisés pour préparer la base de Mannich (A) sont constitués de

($a_1$) au moins un mono- et/ou polyphénol à un ou plusieur noyaux, et qui est substitué au moins partiellement par

($a_2$) un mono- et/ou polyphénol à un ou plusieurs noyaux, qui porte des groupes de formule générale (I)

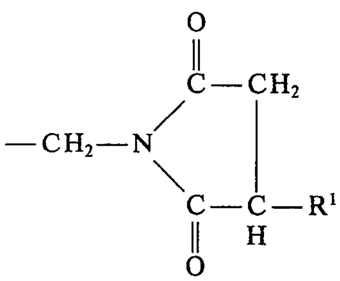

(I)

ainsi qu'éventuellement des groupes de formule générale (II)

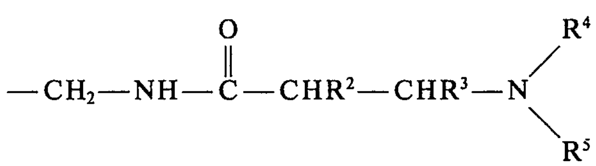

(II)

$R^1$ à $R^5$ ayant les significations sus-indiquées.

4. Produit de polyaddition/polycondensation selon la revendication 1 ou 2, caractérisé par le fait que les composants (B) sont préparés par réaction de composés polyépoxyde avec moins que la quantité équivalente de mono- et/ou polyphénols ($a_2$) à un ou plusieurs noyaux.

5. Utilisation du produit de polyaddition/polycondensation selon l'une des revendications précédentes pour la peinture par électrodéposition cathodique d'objets métalliques.